# FASCICULE DE BREVET EUROPEEN

(11) **EP 2 641 852 B1**
(45) Date de publication et mention de la délivrance du brevet: **10.05.2017**
(21) Numéro de dépôt: 13160262.5
(22) Date de dépôt: 20.03.2013
(51) Int. Cl.: B65F 1/14

(54) **Conteneur de déchets insonorisant de faible coût**
Preisgünstiger schallgedämpfter Abfallbehälter
Inexpensive soundproofing waste container

(30) Priorité: 21.03.2012 FR 1252552
(43) Date de publication de la demande: 25.09.2013
(73) Titulaire: COMPAGNIE PLASTIC OMNIUM, 69007 Lyon (FR)
(72) Inventeur: Troton, Jean, 01800 MEXIMIEUX (FR)
(74) Mandataire: Remy, Vincent Noel Paul

(56) Documents cités:
- DE-U1- 8 534 215
- FR-A1- 2 534 227

## Description

La présente invention concerne le domaine technique des conteneurs pour déchets, notamment des conteneurs d'apport volontaire de déchets. Ce type de conteneur est souvent appelé colonne aérienne, pour un conteneur externe disposé notamment sur la voirie, ou colonne semi-enterrée, ou colonne enterrée, selon qu'il est partiellement ou totalement enterré.

On connaît déjà un type de conteneur formant une colonne d'apport volontaire de déchets et comprenant une structure métallique présentant en partie supérieure une armature pour le levage de ce conteneur, et une enveloppe formant contenant, ou enveloppe. Une telle enveloppe comprend typiquement des parois latérales et une paroi supérieure délimitant la cuve de stockage des déchets. L'enveloppe est typiquement fabriquée en matière plastique Certains conteneurs peuvent aussi comprendre une enveloppe métallique ou en d'autres matériaux, par exemple en résine.

Un tel conteneur comprend également, typiquement en partie inférieure, une ou plusieurs trappe(s) de fond mobile(s) entre une position d'ouverture, pour l'évacuation des déchets, et une position de fermeture.

Une telle colonne, disposée sur la voie publique, est, notamment lorsqu'elle est destinée à la collecte du verre, souvent source de nuisance sonore pour les riverains résidant à proximité.

Pour éviter les nuisances sonores, on connaît dans l'état de la technique une colonne d'apport volontaire comprenant des panneaux en mousse, en caoutchouc, ou en matériau fibreux rapportés sur les parois, notamment les parois latérales de la cuve. Les panneaux permettent d'absorber et/ou d'amortir le bruit, du fait du matériau dont ils sont constitués.

Les performances acoustiques du conteneur sont alors directement liées au choix, à l'épaisseur et à la dimension du matériau insonorisant et, pour parvenir à une insonorisation satisfaisante du conteneur, il faut le munir de panneaux de dimensions relativement importantes qui sont par conséquent relativement onéreux.

Il a également été proposé dans le document WO-A-2011 154 550 de réaliser un conteneur a double enveloppe, avec une lame d'air entre les deux enveloppes, source d'amortissement acoustique. Ceci augmente toutefois la complexité de fabrication du conteneur.

Enfin, l'art antérieur propose également de placer un dispositif dit « limiteur de chute », sous la forme d'une pièce rapportée rentrant vers l'intérieur du conteneur sur une distance limitée, légèrement inclinée, sur laquelle peut tomber par exemple une bouteille, avant de tomber au fond du conteneur. La chute est un peu ralentie, se faisant en deux fois, ce qui limite le bruit émis, mais toutefois dans une proportion limitée.

On trouvera également dans l'état de la technique, par exemple dans les documents DE-U-85 34 215 et FR-A-2 534 227, un conteneur pour déchets selon le préambule de la revendication 1 comprenant des limiteurs de chute et/ou des dispositifs internes de réduction du bruit.

L'invention a pour but de remédier à ces inconvénients en fournissant un conteneur de collecte de déchets à la fois plus insonorisant qu'un conteneur conventionnel, et relativement bon marché.

L'invention permet également de réaliser un conteneur de solidité et/ou de durabilité accrues. Elle permet aussi de limiter les risques de bouchage au niveau de l'introduction et/ou de l'évacuation des déchets. Elle permet enfin de limiter la proportion de bouteilles cassées, ce qui dans certains cas permet de récupérer une partie des bouteilles introduites dans le conteneur, pour leur recyclage.

Afin d'obtenir l'un ou plusieurs de ces avantages techniques, l'invention propose un conteneur pour déchets, par exemple pour verre, comprenant une enveloppe externe, qui comprend au moins une paroi latérale externe, et au moins un orifice d'introduction de déchets, et comprenant à l'intérieur de l'enveloppe externe et en correspondance avec cet orifice une surface continue s'étendant vers le bas le long d'une partie au moins de la paroi latérale, et solidairement à cette paroi latérale, pour constituer une surface de glissement inclinée vers le bas pour un déchet introduit dans le conteneur par l'orifice, **caractérisé en ce que** ladite surface de glissement inclinée vers le bas est une partie intégrante de ladite enveloppe externe.

Selon l'invention, ces surfaces de glissement sont donc des parties constitutives de l'enveloppe externe du conteneur.

Selon l'invention, une enveloppe externe concerne une paroi du conteneur dont une face est à l'extérieur de ce conteneur. Une paroi du conteneur est donc une surface externe, mais présente également une surface interne au conteneur (ou à son enveloppe).

Ainsi, un déchet glissant sur cette surface de glissement se trouve ralenti, du fait du frottement contre cette surface de glissement. Ayant une énergie cinétique plus faible, le bruit de chute finale se trouve réduit. Du fait que la surface de glissement est disposée le long d'une paroi latérale, de résistance mécanique élevée, et est solidaire de cette paroi, cette surface de glissement est mécaniquement plus solide qu'un limiteur de chute, typiquement disposé à l'intérieur de l'enveloppe, et qui doit être fixé généralement par des supports. Ceci procure donc au conteneur une solidité et une durabilité accrues. L'absence de supports internes (la paroi latérale
formant support) permet aussi de limiter les risques de bouchage au niveau de l'introduction et/ou de l'évacuation des déchets. Enfin, l'absence de supports internes, correspond à une simplification de fabrication, pour l'obtention d'un conteneur moins onéreux.

Typiquement, le conteneur comprend un ou plusieurs orifices d'introduction de déchets, par exemple quatre, disposés sensiblement à quatre coins de l'enveloppe, et un nombre identique de surfaces de glissement inclinées vers le bas, en correspondance avec ces orifices.

De façon préférée, l'enveloppe du conteneur est invariante par rotation de 90 degrés par rapport à un axe vertical passant par le centre de cette enveloppe. Avantageusement, cette ou ces surfaces de glissement et l'enveloppe externe qui les comprend sont fabriquées en une seule pièce par rotomoulage, qui est un procédé de fabrication de coût relativement faible.

Le ou les orifices d'introduction de déchets peuvent avantageusement être disposés sur et en partie supérieure de la surface de glissement. Ils sont ainsi disposés en position inclinée, typiquement en dévers, et donc peu ou non exposés à la pluie, de sorte que cela réduit les risques de rentrée d'eau dans le conteneur. Ils peuvent également être disposés sur une partie verticale en continuité et au dessus d' une partie supérieure de la surface de glissement, ce qui limite également les risques de rentrée d'eau de pluie. Il est toutefois également possible de disposer les orifices d'introduction de déchets en partie frontale (sur le dessus du conteneur), typiquement au dessus des parties supérieures des zones de glissement.

Le conteneur selon l'invention peut être fabriqué selon plusieurs modes de réalisation.

Selon un premier mode de réalisation, la surface de glissement inclinée vers le bas est plane et constitue sensiblement un triangle allongé dont la pointe est orientée vers le bas.

Selon un second mode de réalisation, la surface de glissement inclinée vers le bas est courbe, mais développable dans un plan pour constituer sensiblement un triangle allongé dont la pointe est orientée vers le bas.

Selon un autre mode de réalisation, la surface de glissement inclinée vers le bas est constituée sensiblement par une surface de toboggan à bords parallèles ou non parallèles, et est développable dans un plan, par exemple selon un rectangle.

Selon un autre aspect de l'invention, la surface de glissement inclinée vers le bas, et la paroi latérale support contigüe constituent des surfaces de guidage, ou au moins d'accompagnement, pour un déchet en glissement, par exemple une bouteille en verre. Il en résulte que l'impact de cette bouteille en aval de la zone de glissement est beaucoup plus focalisé que l'impact d'une telle bouteille tombant d'abord sur un limiteur de chute conventionnel, puis tombant de ce limiteur de chute vers le fond du conteneur.

Ainsi, il est possible selon l'invention de disposer un matériau d'amortissement sonore, de façon sélective, en vis à vis de la partie inférieure de la surface de glissement pour réaliser un amortissement sonore lors de l'impact de la bouteille en aval de la zone de glissement (impact direct et/ou après rebond). Cette focalisation permet de limiter la surface à revêtir de matériau amortisseur sonore à une zone proche du débouché de la surface de glissement, par exemple au droit du débouché et/ou sur une zone de rebond possible d'une bouteille, ce qui réduit le coût du conteneur.

Selon une autre disposition caractéristique optionnelle de réalisation de l'invention, le conteneur comprend au moins une surface de glissement gauche, qui est au moins en partie non développable dans un plan, typiquement dans sa partie inférieure terminale, et qui est orientée pour imprimer un mouvement latéral de déversement à un déchet en glissement sur cette surface, tendant à écarter ce déchet de la surface de glissement. Ainsi, un déchet en glissement tendra à se déverser vers l'intérieur du conteneur, et donc à s'écarter de la paroi latérale, ce qui limite les risques d'accumulation de déchets en partie inférieure du conteneur, à proximité de la partie inférieure de la surface de glissement.

Alternativement, le conteneur peut comprendre un matériau d'amortissement sonore, disposé en vis à vis de la partie inférieure de la surface de glissement, qui soit orienté pour que l'impact du déchet ou de la bouteille sur ce matériau d'amortissement (impact direct et/ou après un premier rebond) fasse rebondir le déchet ou la bouteille vers l'intérieur du conteneur. La surface d'amortissement peut ainsi former un angle par rapport à la paroi correspondante du conteneur, tendant à faire rebondir le déchet ou la bouteille vers l'intérieur du conteneur, et éviter l'accumulation de déchets ou bouteilles à proximité de la partie inférieure de la surface de glissement.

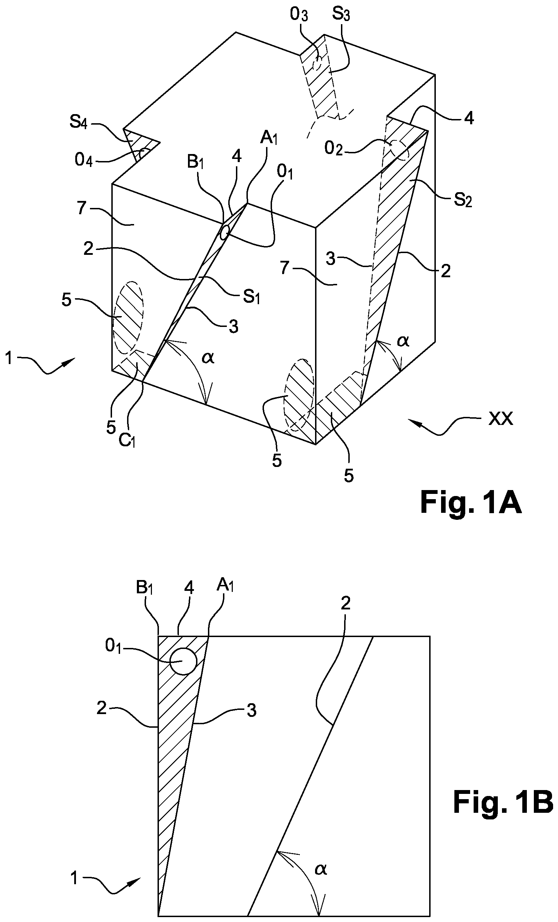

Typiquement, la surface de glissement s'étend sur une distance horizontale au moins égale à 0,4 x L, ou à 0,5 x L, dans laquelle L est la largeur horizontale de l'enveloppe (par exemple la partie horizontale du rectangle de la figure 1_{B} ci-après). Elle s'étend typiquement sur une hauteur verticale au moins égale à 0,4 x H, ou 0,5 x H, dans laquelle H est la hauteur verticale de l'enveloppe (par exemple la partie verticale du rectangle de la figure 1_{B} ci-après). Ainsi, la surface d'accompagnement du déchet est relativement étendue, et en particulier beaucoup plus étendue que celle d'un limiteur de chute conventionnel, qui d'ailleurs n'accompagne pas véritablement le déchet dans sa chute. Ceci permet un ralentissement du déchet par frottement qui est accru, et/ou une meilleure focalisation vers une surface limitée comprenant un matériau amortisseur sonore, cette surface limitée réduisant le besoin en matériau amortissant, et permettant d'obtenir un gain sur le coût global du conteneur.

La largeur de la surface de glissement (dans une direction sensiblement perpendiculaire au mouvement du déchet) est typiquement inférieure à 25% et de préférence inférieure à 18% de la profondeur correspondante de l'enveloppe du conteneur. Ainsi, la zone intérieure centrale de l'enveloppe du conteneur est généralement libre de supports internes, ce qui limite les risques de blocage de déchets à l'intérieur du conteneur et au niveau de la trappe de sortie.

L'invention sera mieux comprise à la lecture des figures, dans lesquelles :
La figure 1_{A} représente en perspective l'enveloppe d'un conteneur selon un premier mode de réalisation de l'invention.
La figure 1_{B} est une vue horizontale de l'enveloppe de la figure 2_{A} dans la direction XX.
La figure 2_{A} représente en perspective l'enveloppe d'un conteneur selon un second mode de réalisation de l'invention.

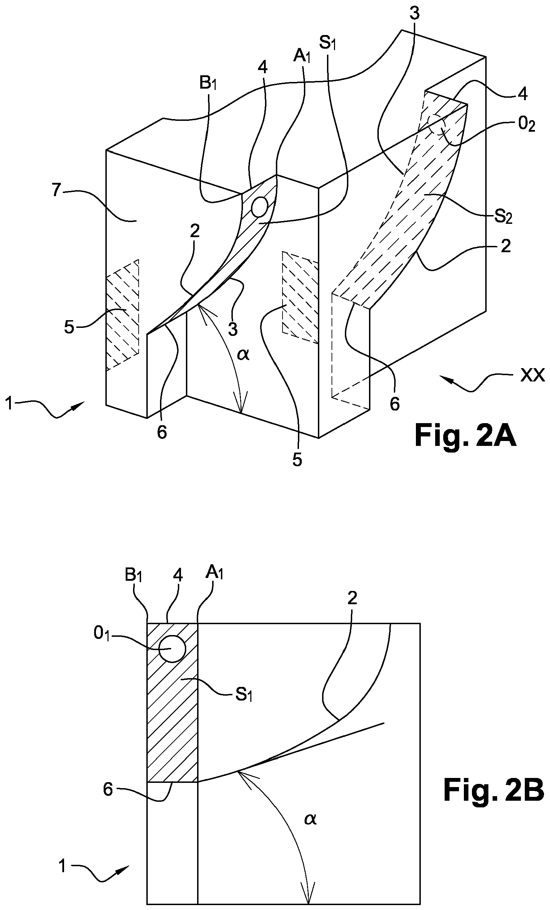

La figure 2_{B} est une vue horizontale de l'enveloppe de la figure 2_{A} dans la direction XX.

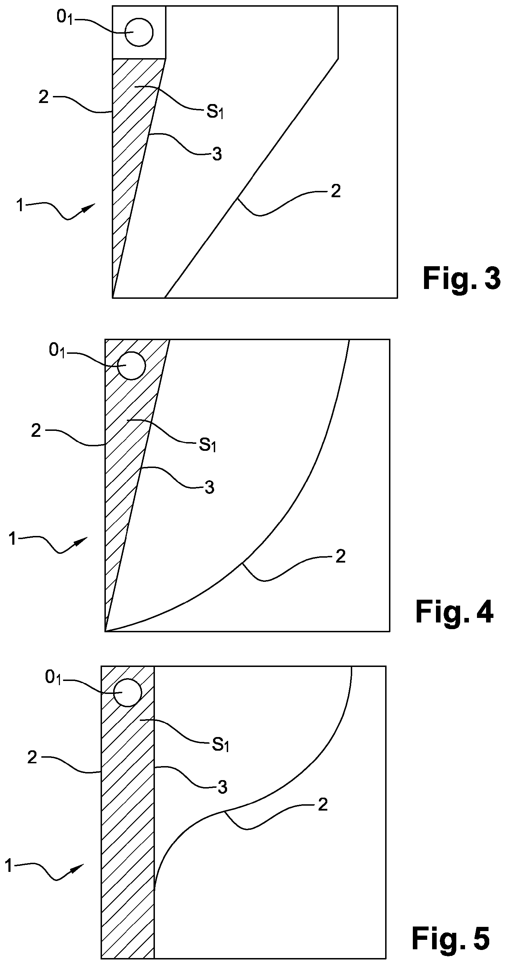

La figure 3 est une vue horizontale d'un troisième mode de réalisation de l'invention.
La figure 4 est une vue horizontale d'un quatrième mode de réalisation de l'invention.
La figure 5 est une vue horizontale d'un cinquième mode de réalisation de l'invention.

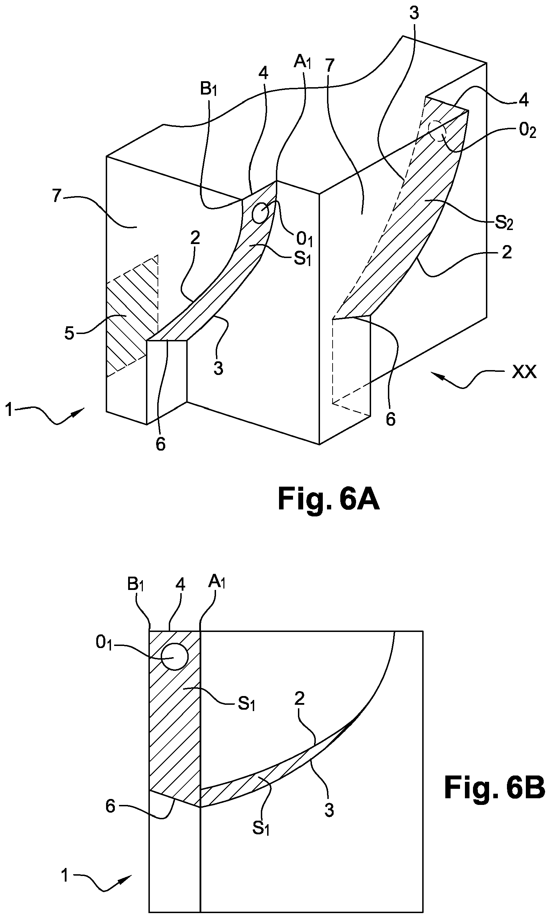

La figure 6_{A} représente en perspective une partie de l'enveloppe d'un conteneur selon un sixième mode de réalisation de l'invention.
La figure 6_{B} est une vue horizontale de l'enveloppe de la figure 6_{A} dans la direction XX.

On se réfère maintenant à la figure 1_{A}. Elle représente une enveloppe 1 d'un conteneur, typiquement pour déchets en verre, comprenant quatre orifices 01, 02, 03, et 04 d'introduction de déchets en verre, auxquels sont respectivement associées quatre surfaces de glissement S1, S2, S3, et S4 (S3 et S4 n'étant représentées que partiellement), orientées vers le bas, constituées chacune par une surface plane triangulaire, limitée pour S1 et S2 par les côtés 2, 3, et 4 du triangle correspondant.

Lorsqu'un déchet, par exemple une bouteille de verre, est introduit par l'orifice 01 situé en partie supérieure de la surface S1, à proximité de son segment supérieur 4 compris entre les points A1 et B1, il glisse vers le bas sur la surface S1, et impacte le bas de l'enveloppe 1 au niveau d'une surface d'amortissement 5, d'abord d'impact direct (surface représentée par un rectangle) puis de rebond (surface oblongue), ces surfaces comprenant un matériau d'amortissement sonore, par exemple une couche de caoutchouc. Comme la surface S1, en liaison avec la surface latérale contigüe 7 de l'enveloppe, accompagne la chute du déchet sur une longueur importante, il y a un ralentissement lors de la chute, dû au frottement, ce qui réduit le bruit d'impact en fond de conteneur, près du point C1.

Dans la suite de la description, on considérera que le déchet est une bouteille, cet exemple n'étant en rien limitatif.

Il y a par ailleurs un accompagnement de la bouteille par les surfaces S1 et 7, et donc une certaine concentration de la zone d'impact de la bouteille avec l'enveloppe, de telle sorte que la surface d'amortissement 5 disposée en vis à vis de S1 est de dimension limitée, ce qui limite le coût du conteneur.

De façon générale, chaque zone revêtue d'un matériau d'amortissement représente généralement moins de 30%, et souvent moins de 20% de la surface frontale du conteneur en vue horizontale (surface du rectangle de la figure 1_{B} dans le cas de la zone 5 de la figure 1_{A} qui est disposée en vis-à-vis de S₁).

La surface de glissement S1 est une partie structurelle de l'enveloppe 1 du conteneur, de même que les autres surfaces de glissement S₂, S₃, et S₄, ce qui permet de fabriquer en même temps, et de façon intégrée, l'enveloppe 1 et les quatre surfaces de glissement S₁, S₂, S₃, et S₄ par la technique du rotomoulage, ce qui réduit notablement le coût du conteneur. Cette conception mécanique de zones de glissement constituées par des parties structurelles de l'enveloppe du conteneur est beaucoup plus robuste que celle d'un limiteur de chute interne rattaché par des bras à l'enveloppe ou à une structure. Ceci augmente donc la robustesse et la longévité du conteneur.

Par ailleurs la zone interne centrale du conteneur est vide, dépourvue de supports internes, ce qui limite les risques de blocage, notamment à l'intérieur du conteneur, ou au niveau d'une trappe de sortie.

Chacune des surfaces S₁, S₂, S₃, et S₄ forme un angle α avec l'horizontale. Généralement, selon l'invention, l'angle α avec l'horizontale peut être fixe ou varier le long de la surface de glissement. Il est souvent compris entre 30 et 80 degrés, le plus souvent entre 45 degrés et 70 degrés sur la plus grande partie au moins, ou la totalité de la surface, ou des surfaces de glissement.

La figure 2_{A} représente une enveloppe d'un second mode de réalisation selon l'invention, avec les mêmes signes de référence. Les surfaces de glissement S₁, S₂, (et S₃ et S₄ non représentées) ont, ici, non pas une forme plane triangulaire, mais une forme non plane analogue à celle d'un toboggan à bords parallèles, dont le bord de fuite, ou débouché 6 (correspondant au point C1 de la figure 1_{A}) est situé au dessus du fond de l'enveloppe 1 du conteneur. Chaque surface de glissement est donc développable dans un plan, pour former un rectangle allongé. Comme dans le mode de réalisation précédent, un déchet, tel une bouteille, glisse sur une surface de glissement, et du fait du frottement arrive à vitesse relativement limitée en impact d'une surface d'amortissement 5, par exemple revêtue de caoutchouc.

Les figures 3, 4 et 5 représentent des vues horizontales d'autres modes de réalisation, dont les vues en perspective ne sont pas représentées. On peut cependant comprendre aisément, dans ces vues analogues aux vues horizontales selon XX précédemment citées, que :
- la figure 3 représente une enveloppe de conteneur à surfaces de glissement planes triangulaires, mais comportant en partie haute, en continuité de ces surfaces, des parties verticales sur lesquelles sont disposés les orifices d'introduction de déchets.
- la figure 4 représente également une enveloppe de conteneur à surfaces de glissement triangulaires, mais non planes (qui sont cependant développable dans un plan pour former un triangle)
- la figure 5 représente une enveloppe de conteneur à surfaces de glissement de type toboggan à bords parallèles, mais dont la pente commence par décroître, puis croît à nouveau, de telle sorte qu'elle présente une convexité tournée vers le bas puis vers le haut.

Les figures 6_{A} et 6_{B} sont des vues d'un mode de réalisation proche de celui des figures 2_{A} et 2_{B}, mais dans lesquels les surfaces de glissement ne sont plus développable dans un plan mais sont des surfaces gauches. Les bords de fuite 6 ne sont plus parallèles aux bords supérieurs 4, mais sont inclinés, au moins en partie terminale, vers l'intérieur du conteneur pour imprimer un mouvement latéral de déversement à un déchet en glissement sur ces surfaces, tendant à écarter ce déchet de la surface de glissement et de la paroi latérale 7 contigüe. Ainsi, les risques d'accumulation de déchets au débouché des surfaces de glissement sont limités.

L'invention concerne typiquement un conteneur d'apport volontaire de déchets de type verre à enveloppe en matériau plastique et/ou en résine. Elle s'applique à tout type de conteneur, notamment à une colonne aérienne, ou semi-enterrée, ou enterrée, de volume quelconque, notamment entre 0,8 et 10 m³.

L'invention n'est toutefois pas limitée aux modes de réalisation présentés, et d'autres modes de réalisation apparaîtront clairement à l'homme du métier. Il est notamment possible de réaliser un conteneur selon l'invention comprenant également des parties internes, externes ou des dispositifs connus, par exemple un ou plusieurs limiteurs de chute, et/ou matériaux d'amortissement sonore de nature diverse, une enveloppe à double coque etc...

## Revendications

1. Conteneur pour déchets, par exemple pour verre, comprenant une enveloppe externe (1) qui comprend au moins une paroi latérale externe (7), et au moins un orifice (O₁) d'introduction de déchets, et comprenant à l'intérieur de l'enveloppe externe (1), en correspondance avec l'orifice (O₁), une surface continue s'étendant vers le bas le long d' une partie au moins de la paroi latérale (7), solidairement à cette paroi, pour constituer une surface de glissement inclinée vers le bas (S₁) pour un déchet introduit dans le conteneur par l'orifice (O₁),
**caractérisé en ce que** ladite surface de glissement inclinée vers le bas (S₁) est une partie intégrante de ladite enveloppe externe (1).

2. Conteneur selon la revendication 1, comprenant un ou plusieurs orifices d'introduction de déchets (O₁, O₂, O₃, O₄), et en correspondance avec ce ou ces orifices une ou plusieurs surfaces de glissement inclinée(s) vers le bas (S₁, S₂, S₃, S₄), l'ensemble de ces surfaces de glissement constituant une ou plusieurs parties de l'enveloppe externe (1), cette ou ces surfaces de glissement et l'enveloppe externe qui les comprend étant fabriquées en une seule pièce par rotomoulage.

3. Conteneur selon l'une des revendications 1 et 2, dans lequel l'orifice (O₁) est disposé sur une partie supérieure de la surface de glissement inclinée vers le bas (S₁), ou sur une partie verticale disposée en continuité et au dessus d'une partie supérieure de ladite surface de glissement (S₁).

4. Conteneur selon l'une des revendications 1 à 3, comprenant au moins une surface de glissement (S₁, S₂, figure 1 ; S₁, figure 4), plane ou courbe, développable dans un plan pour constituer sensiblement un triangle allongé dont la pointe est orientée vers le bas.

5. Conteneur selon l'une des revendications 1 à 4, comprenant au moins une surface de glissement inclinée vers le bas (S₁, S₂, figure 2_{A}), constituée sensiblement par une surface de toboggan à bords parallèles (2, 3, figure 2_{A}), développable dans un plan.

6. Conteneur selon l'une des revendications 1 à 5, comprenant une surface d'amortissement (5) disposée sélectivement en vis à vis du débouché (6) en partie inférieure de ladite surface de glissement, pour réaliser un amortissement sonore lors de la chute en glissement d'un déchet sur ladite surface de glissement (S₁).

7. Conteneur selon l'une des revendications précédentes, comprenant au moins une surface de glissement (S₁, S₂, figure figure 6_{A}),qui est au moins en partie non développable dans un plan, orientée pour imprimer un mouvement latéral de déversement à un déchet en glissement sur ladite surface, tendant à écarter ce déchet de la surface de glissement, par exemple dans une partie terminale de cette surface de glissement.

8. Conteneur selon l'une des revendications précédentes dans lequel ladite paroi (7) est sensiblement plane, de largeur L et de hauteur H, et dans lequel ladite surface de glissement inclinée vers le bas s'étend sur une distance horizontale au moins égale à 0,5 x L, et sur une hauteur verticale au moins égale à 0,5 x H.

9. Conteneur d'apport volontaire de déchets de type verre, et à enveloppe en matériau plastique et/ou en résine, fabriqué par rotomoulage, selon l'une des revendications 1 à 8.

## Patentansprüche

1. Behälter für Abfälle, zum Beispiel für Glas, umfassend eine äußere Umhüllung (1), die mindestens eine äußere Seitenwand (7) und mindestens eine Öffnung (O1) zum Zuführen von Abfällen umfasst, und im Inneren der äußeren Umhüllung (1), korrespondierend mit der Öffnung (O1), eine durchgängige Fläche, die sich nach unten entlang mindestens eines Teils der Seitenwand (7) erstreckt und mit dieser Wand fest verbunden ist, um eine nach unten geneigte Gleitfläche (S1) für einen durch die Öffnung (O1) in den Behälter zugeführten Abfall zu bilden, **dadurch gekennzeichnet, dass** die nach unten geneigte Gleitfläche (S1) ein integrierender Bestandteil der äußeren Umhüllung (1) ist.

2. Behälter nach Anspruch 1, umfassend eine oder mehrere Öffnungen zum Zuführen von Abfällen (O1, O2, O3, O4) und korrespondierend mit dieser oder diesen Öffnung(en) eine oder mehrere nach unten geneigte Gleitfläche(n) (S1, S2, S3, S4), wobei die Anordnung dieser Gleitflächen einen oder mehrere Teile der äußeren Umhüllung (1) bildet, wobei diese Gleitfläche(n) und die äußere Umhüllung, die sie umfasst, einstückig durch Rotationsformen hergestellt sind.

3. Behälter nach einem der Ansprüche 1 und 2, wobei die Öffnung (O1) an einem oberen Teil der nach unten geneigten Gleitfläche (S1) oder an einem vertikalen Teil angeordnet ist, der in Kontinuität und oberhalb eines oberen Teils der Gleitfläche (S1) angeordnet ist.

4. Behälter nach einem der Ansprüche 1 bis 3, umfassend mindestens eine ebene oder gekrümmte Gleitfläche (S1, S2, Figur 1; S1, Figur 4), die in einer Ebene abwickelbar ist, um im Wesentlichen ein langgezogenes Dreieck zu bilden, dessen Spitze nach unten gerichtet ist.

5. Behälter nach einem der Ansprüche 1 bis 4, umfassend mindestens eine nach unten geneigte Gleitfläche (S1, S2, Figur 2A), die im Wesentlichen von einer Rutschfläche mit parallelen Rändern (2, 3, Figur 2A) gebildet ist und in einer Ebene abwickelbar ist.

6. Behälter nach einem der Ansprüche 1 bis 5, umfassend eine Dämpfungsfläche (5), die selektiv dem Auslass (6) gegenüber im unteren Teil der Gleitfläche angeordnet ist, um eine Geräuschdämpfung beim Hinabgleiten eines Abfalls auf der Gleitfläche (S1) zu realisieren.

7. Behälter nach einem der vorhergehenden Ansprüche, umfassend mindestens eine Gleitfläche (S1, S2, Figur 6A), die zumindest zum Teil nicht in einer Ebene abwickelbar ist und ausgerichtet ist, um einem auf der Fläche gleitenden Abfall eine seitliche Ableitungsbewegung zu verleihen, die dazu neigt, diesen Abfall von der Gleitfläche zu beabstanden, zum Beispiel in einem Endteil dieser Gleitfläche.

8. Behälter nach einem der vorhergehenden Ansprüche, wobei die Wand (7) im Wesentlichen eben ist, eine Breite L und eine Höhe H hat, und wobei die nach unten geneigte Gleitfläche sich über eine horizontale Distanz, die mindestens gleich 0,5 x L ist, und über eine vertikale Höhe, die mindestens gleich 0,5 x H ist, erstreckt.

9. Behälter zum freiwilligen Sammeln von Abfällen des Glastyps mit einer Umhüllung aus Kunststoff und/oder aus Harz, die durch Rotationsformen hergestellt ist, nach einem der Ansprüche 1 bis 8.

## Claims

1. Waste container, for example for glass, comprising an outer casing (1) which comprises at least one outer side wall (7), and at least one waste introduction opening (O₁), and comprising inside the outer casing (1), opposite the hole (O₁), a continuous surface extending downwards along at least a part of the side wall (7), attached to this wall, to form a sliding surface inclined downwards (S₁) for waste introduced into the container through the hole (O₁),
**characterised in that** said sliding surface inclined downwards (S₁) is an integral part of said outer casing (1).

2. Container according to claim 1, comprising one or more waste introduction holes (O₁, O₂, O₃, O₄), and opposite this or these holes one or more sliding surfaces inclined downwards (S₁, S₂, S₃, S₄), all these sliding surfaces forming one or more parts of the outer casing (1), this or these sliding surfaces and the outer casing which comprises them being manufactured in one piece by rotational moulding.

3. Container according to claim 1 or 2, wherein the hole (O₁) is arranged on an upper part of the sliding surface inclined downwards (S₁), or on a vertical part arranged in continuity and above an upper part of said sliding surface (S₁).

4. Container according to one of claims 1 to 3, comprising at least one sliding surface (S₁, S₂, figure 1; S₁, figure 4), flat or curved, developable in a plane to form a substantially elongated triangle whose tip points downwards.

5. Container according to one of claims 1 to 4, comprising at least one sliding surface inclined downwards (S₁, S₂, figure 2_{A}), formed substantially by a slide surface with parallel edges (2, 3, figure 2_{A}), developable in a plane.

6. Container according to one of claims 1 to 5, comprising a soundproofing surface (5) selectively arranged opposite the opening (6) in the lower part of said sliding surface, to dampen the noise when waste slides down said sliding surface (S₁).

7. Container according to one of the preceding claims, comprising at least one sliding surface (S₁, S₂, figure 6_{A}), which is at least partly non-developable in a plane, oriented to give waste sliding down said surface a sideways movement, tending to move this waste away from the sliding surface, for example in a final part of this sliding surface.

8. Container according to one of the preceding claims, wherein said wall (7) is substantially flat, of width L and height H, and wherein said sliding surface inclined downwards extends over a horizontal distance of at least 0.5 x L, and over a vertical height of at least 0.5 x H.

9. Voluntary waste disposal container for glass, with a plastic and/or resin casing, manufactured by rotational moulding, according to one of claims 1 to 8.
